# EUROPÄISCHE PATENTSCHRIFT

(11) **EP 2 809 483 B1**
(45) Veröffentlichungstag und Bekanntmachung des Hinweises auf die Patenterteilung: **05.07.2017**
(21) Anmeldenummer: 13702797.5
(22) Anmeldetag: 30.01.2013
(51) Int. Cl.: B25B 29/02, F16B 31/04, F16B 33/02

(54) **VERFAHREN ZUM HERSTELLEN EINER MECHANISCH SPANNBAREN SCHRAUBVERBINDUNG UND SPANNBARE SCHRAUBVERBINDUNG MIT EINEM SCHRAUBBOLZEN UND EINER MUTTER**
METHOD FOR PRODUCING A THREADED CONNECTION THAT CAN BE TIGHTENED MECHANICALLY, AND THREADED CONNECTION THAT CAN BE TIGHTENED HAVING A THREADED BOLT AND A NUT
PROCÉDÉ DE FABRICATION D'UN ASSEMBLAGE VISSÉ À SERRAGE MÉCANIQUE ET ASSEMBLAGE VISSÉ POUVANT ÊTRE SERRÉ AVEC UN BOULON FILETÉ ET UN ÉCROU

(30) Priorität: 01.02.2012 DE 102012201462
(43) Veröffentlichungstag der Anmeldung: 10.12.2014
(73) Patentinhaber: Köllges, Ralf, 41812 Erkelenz (DE)
(72) Erfinder: Köllges, Ralf, 41812 Erkelenz (DE)
(74) Vertreter: Patentanwälte Bauer Vorberg Kayser
(86) Internationale Anmeldenummer: PCT/EP2013/051822
(87) Internationale Veröffentlichungsnummer: WO 2013/113768

(56) Entgegenhaltungen:
- WO-A1-03/025405

## Beschreibung

Die Erfindung bezieht sich auf ein Verfahren zum Herstellen einer mechanisch spannbaren, insbesondere hydraulisch spannbaren Schraubverbindung und auf eine Schraubverbindung mit einem Schraubbolzen und einer Mutter, die hydraulisch spannbar ist.

Hydraulisch spannbare Schraubverbindungen sind allgemein bekannt. Sie werden zumeist im Zusammenhang mit einer hydraulischen Schraubenspannvorrichtung beschrieben. Derartige Schraubenspannvorrichtungen zeigen die folgenden Druckschriften: EP 7 329 84 B1, DE 10 2004 043 146 B3, EP 10 078 58 B1, WO 2004/ 108360 A1, DE 43 13 778 A1, EP 1 786 599 B1 und DE 93 16 464 U1. Aus der DE 10137896 A1 ist ein Verfahren zur Steuerung einer derartigen hydraulischen Schraubenspannvorrichtung bekannt.

Ein typischer hydraulischer Schraubenspannvorgang beim Anziehen oder Lösen einer hochbelastbaren Schraubenverbindung läuft wie folgt ab: Durch die zu verbindenden Teile, beispielsweise durch Löcher zweier zu verbindender Flansche, werden Schraubbolzen gesteckt. Mittels einer Schraubenspannvorrichtung werden die Schraubbolzen hydraulisch gedehnt, also in einem vorgegebenen, gedehnten Zustand gebracht. In diesem Zustand wird die Mutter festgezogen, also beispielsweise gegen den Flansch gedreht. Anschließend wird die hydraulische Vorspannung der Schraubenspannvorrichtung entlastet. Der Schraubbolzen ist nun dadurch vorgespannt, dass er zwischen einem Kopf des Schraubbolzens und der Mutter eingespannt ist.

Es sind auch anderweitig mechanisch spannbare Schraubverbindungen bekannt. In einer Ausführung werden anstelle von hydraulisch arbeitenden Spannvorrichtungen mehrere einzelne Schrauben eingesetzt, die schrittweise angezogen werden. Derartige Spannvorrichtungen werden z.B. von der MTU Friedrichshafen GmbH angeboten.

Ein Problem bei derartigen Schraubverbindungen ist es, die Kraftübertragung zwischen Schraubengewinde und Mutterngewinde so gleichmäßig wie möglich zu gestalten. Im Idealfall sollen alle Gewindegänge der Mutter gleichmäßig belastet sein. Es sollen keine Lastspitzen an einzelnen, lokalen Stellen auftreten. Das Material von Schraubbolzen und Mutter soll möglichst gleichmäßig belastet sein, auch bei dem Schraubbolzen sollen keine Lastspitzen auftreten.

Nach dem Stand der Technik wird das Schraubengewinde nach einer vorgegebenen Gewindeart hergestellt, verwiesen wird auf DIN 202 und DIN 2244. Das Gewinde wird beispielsweise als metrisches ISO-Gewinde ausgeführt, z.B. nach DIN 13T19. Dieses Gewinde wird hergestellt in einem Zustand, in dem der Schraubbolzen entspannt ist.

Wird der Schraubbolzen nun gedehnt, verändert sich das Gewinde. Es hat sich nun überraschend herausgestellt, dass das Gewinde sich nicht einfach in Längsrichtung verlängert, vielmehr ändern sich mehrere Merkmale des Gewindes in einer nicht linearen Weise. Es verändern sich beispielsweise die Flankenwinkel und Flankenverläufe. Es verändern sich der Nenndurchmesser, der Kerndurchmesser und viele andere Merkmale.

Dabei ist zu beachten, dass der Schraubbolzen lediglich in axialer Richtung gedehnt wird. Würde der Schraubbolzen thermisch erwärmt, würde er sich auch quer zur Axialrichtung ausdehnen. Dies findet aber bei einer hydraulischen Vorspannung nicht statt, bei einer solchen wird der Außendurchmesser sogar kleiner.

Nun hängt die tatsächliche Form des Schraubengewindes des Schraubbolzens auch noch von der Höhe der Zugkraft ab, die die Schraubenspannvorrichtung auf den Schraubbolzen ausübt. Je höher die Kraft der Vorspannung ist, umso stärker unterscheidet sich das Schraubengewinde vom Gewinde im Nullzustand, also im nicht gedehnten Zustand des Schraubbolzens.

Wie oben erwähnt, ist man bestrebt, möglichst homogen und gleichmäßig die Spannkraft von Schraubengewinde auf Mutterngewinde zu übertragen. Mit den gängigen Schraubverbindungen nach dem Stand der Technik und den entsprechenden Verfahren zur Herstellung von Schraubverbindungen lässt sich eine gleichmäßige Krafteinleitung praktisch nicht erreichen, es treten zwangsläufig Lastspitzen auf.

Hiervon ausgehend ist es Aufgabe der Erfindung, ein Verfahren der eingangs genannten Art und eine entsprechende Schraubverbindung anzugeben, bei der es möglich ist, die Last vom Schraubengewinde gleichmäßiger als bisher auf das Mutterngewinde zu übertragen und auf diese Weise Lastspitzen und übermäßige, lokale Belastungen anderer Art so weit wie möglich abzubauen.

Verfahrensmäßig wird diese Aufgabe gelöst durch ein Verfahren zum Herstellen einer mechanisch, insbesondere hydraulisch spannbaren Schraubverbindung mit einem Schraubbolzen und einer ein Mutterngewinde aufweisenden Mutter, wobei
- ein Schraubbolzen mit einem vorgegebenen Schraubengewinde hergestellt wird,
- der Schraubbolzen in einen vorgegebenen, gedehnten Zustand gebracht wird,
- das Schraubengewinde in dem vorgegebenen, gedehnten Zustand in seiner genauen Geometrie erfasst und ein Abbild erstellt wird, insbesondere das Abbild durch Abformen oder optisches Abtasten hergestellt wird, und
- das Mutterngewinde als möglichst exakte Kopie des Abbilds hergestellt wird.
Vorrichtungsmäßig wird diese Aufgabe gelöst durch eine mechanisch, insbesondere hydraulisch spannbare Schraubverbindung mit einem Schraubbolzen und einer Mutter, wobei der Schraubbolzen ein Schraubengewinde und die Mutter ein Mutterngewinde aufweist, wobei das Mutterngewinde eine Kopie eines Abbilds des Schraubengewindes ist, welches Abbild von dem Schraubengewinde in einem Zustand erhalten wurde, den das Schraubengewinde in einem vorgegebenen, gedehnten Zustand des Schraubbolzens hat.

Bei dem Verfahren und der entsprechenden Schraubverbindung entspricht das Mutterngewinde so exakt wie möglich dem Schraubengewinde, jedoch nicht im ungedehnten Zustand des Schraubbolzens, sondern in einem vorgegebenen, gedehnten Zustand des Schraubbolzens. Dieser Zustand entspricht soweit wie möglich dem Zustand, den der Schraubbolzen im Montagezustand hat. Im Montagezustand befindet sich der Schraubbolzen beispielsweise zwischen zwei Flanschen P025n einer Flanschverbindung oder anderen Werkstücken, die miteinander verbunden werden müssen. Im Montagezustand ist der Schraubbolzen in einem Dehnungszustand.

Gemäß der Erfindung kann es somit für ein und denselben Schraubbolzen verschiedene, angepasste Muttern geben, beispielsweise eine Mutter für einen geringeren Spannungszustand des Schraubbolzens, eine Mutter für einen mittleren Spannungszustand und eine Mutter für einen höheren Spannungszustand des Schraubbolzens.

Wenn bei dem erfindungsgemäßen Verfahren die Mutter an das gedehnte Schraubengewinde angepasst wird, ist dies auch in kinematisch umgekehrter Richtung möglich, man kann auch von einem Mutterngewinde ausgehen und in die gedehnte Schraube das Schraubengewinde als exakte Kopie des Muttergewindes einbringen.

Als Abbild des Schraubengewindes wird eine exakte, möglichst detailgenau erfasste Wiedergabe des Schraubengewindes in einem vorgegebenen, gedehnten Zustand verstanden. Dieses Abbild kann beispielsweise über eine geeignete Abformmasse erhalten werden. Geeignete Abformmassen sind unter Technovit (eingetragene Marke) bekannt, Zahnärzte verwenden entsprechende Abdruckmassen für die Herstellung von Abbildern der Zähne. Eine optische Erfassung, beispielsweise mittels einer bildgebenden Kamera oder eines abtastenden Strahls ist ebenfalls vorgesehen. Entscheidend und unabhängig vom jeweils benutzten Verfahren soll erreicht werden, dass das Abbild möglichst getreu der Form des Schraubbolzens im gespannten Zustand ist.

Um die Mutter herzustellen, wird das Abbild gegebenenfalls invertiert. Wenn das Abbild durch Abformen mittels einer Abformmasse erhalten wird, ist es bereits invertiert. Während das Original, also das Schraubengewinde, nach außen hin durch das Schraubengewindes begrenzt ist, ist das invertierte Abbild, das durch Abformen erreicht wird, nach innen hin durch das Gewinde begrenzt. Wenn das Abbild optisch erfasst wird und elektronisch vorliegt, muss es gegebenenfalls noch invertiert werden. Das Abbild wird nun für die Herstellung des Mutterngewindes verwendet. Dabei muss gegebenenfalls noch ein gewisser Freiraum hinzugegeben werden, um genügend Spiel zwischen Schraubengewinde und Mutter zu haben, damit man die Mutter überhaupt aufschrauben kann. Alternativ kann man die Mutter aber auch teilen, beispielsweise in zwei Hälften, und diese durch eine äußere Klammer gegen das gedehnte Schraubengewinde pressen, in diesem Fall ist eine Spielzugabe nicht oder nur in geringerem Maße angebracht. Alternativ kann man die Mutter auch ausdehnen, z.B. auf eine höhere Temperatur bringen.

Es ist möglich, den vorgegebenen, gedehnten Zustand speziell zu wählen. Ist das Mutterngewinde für einen Zustand des Schraubbolzens hergestellt worden, den dieser in einer hydraulischen Schraubenspannvorrichtung hat, so ist davon auszugehen, dass in der fertiggestellten Schraubverbindung der Spannungszustand des Schraubbolzens etwas geringer ist. Demgemäß ist auch das Schraubengewinde etwas kürzer. Man kann nun den vorgegebenen, gedehnten Zustand so wählen, dass er dem Spannungszustand in der fertiggestellten Schraubverbindung entspricht. Dann wird für die Herstellung des Abbildes der Schraubbolzen zunächst mittels der hydraulischen Schraubenspannvorrichtung in einen Spannungszustand gebracht, der dem Spannungszustand in der fertiggestellten Schraubverbindung entspricht und wird das Abbild erstellt. Bei der Montage wird der Schraubbolzen dann mittels der hydraulischen Schraubenspannvorrichtung in einen etwas höheren Spannungszustand gebracht und hat dann ein Gewinde, das nicht dem Mutterngewinde exakt entspricht. Sobald aber die hydraulische Schraubenspannvorrichtung entlastet ist und die Schraubverbindung fertiggestellt ist, hat der Schraubbolzen den geringeren Spannungszustand, wie er in der fertiggestellten Schraubverbindung vorliegt.

Wenn die Mutter Last übernimmt, wird sie etwas zusammengedrückt. Dieses Komprimieren der Mutter kann berücksichtigt werden, in dem das Abbild entsprechend axial verkürzt wird. Vorzugsweise wird das Mutterngewinde in axialer und/oder radialer Richtung etwas gegenüber dem Abbild verändert. Die Veränderung ist vorzugsweise größer Null und kleiner 0,5%.

Bei der erfindungsgemäßen Schraubverbindung sind Mutterngewinde und Schraubengewinde so exakt aneinander angepasst, dass sie im entspannten Zustand von Schraubbolzen zumeist nicht betätigbar sind, also ein Schraubvorgang nicht durchgeführt werden kann. Der Schraubvorgang ist erst in dem Zustand möglich, zumindest deutlich vereinfacht, für den das Abbild genommen wurde. Es kann durchaus sein, dass bei deutlich über dem vorgegebenen, gedehnten Zustand liegenden Dehnungen des Schraubbolzens die Gewindeverbindung ebenfalls schlecht betätigbar ist. Dies bedeutet aber, dass es im ungedehnten Zustand zumindest problematisch sein kann, die erfindungsgemäße Mutter auf den erfindungsgemäßen Schraubbolzen aufzuschrauben. Um ein Aufschrauben im gedehnten Zustand ermöglichen zu können, ist es vorteilhaft, den Schraubbolzen speziell auszubilden. Er hat, wie dies aus dem Stand der Technik bekannt ist, in Verlängerung des Schraubengewindes einen dünneren bzw. verjüngten Bereich, über den die hydraulische Vorspannung eingeleitet wird. Er ist so im Durchmesser reduziert, dass er die Mutter auch im entspannten Zustand des Schraubbolzens aufnehmen kann und ein Bewegen der Mutter möglich ist. In diesem verjüngten Bereich befindet sich die speziell hergestellte Mutter, wenn die Schraubenverbindung montiert werden soll. Im gedehnten Zustand des Schraubbolzens kann die Mutter aus dem verjüngten Bereich in den Schraubenbereich gebracht und gegenüber dem Schraubenbereich verdreht und angezogen werden.

Weitere Vorteile und Merkmale der Erfindung ergeben sich aus den sonstigen Ansprüchen sowie der nun folgenden Beschreibung von drei nicht einschränkend zu verstehenden Ausführungsbeispielen der Erfindung, die unter Bezugnahme auf die Zeichnung im Folgenden näher erläutert werden. In dieser Zeichnung zeigen:
- Fig. 1:: eine Seitenansicht eines Schraubbolzens;
- Fig. 2:: eine Seitenansicht, wie Figur 1, auf den Schraubbolzen, der jedoch nun in einem vorgegebenen, gedehnten Zustand ist, eine Abformeinrichtung befindet sich in Nähe des Schraubengewindes an der Stelle, wo in der montierten Schraubverbindung die Mutter ist;
- Fig. 3:: die Abformeinrichtung gemäß Figur 2, nunmehr nach Herstellen eines Abbildes und darunter, teilweise geschnitten dargestellt, eine Mutter einer spannbaren Schraubverbindung mit einem Muttergewinde, das Muttergewinde ist entsprechend dem Abbild der Abformeinrichtung hergestellt;
- Fig. 4:: eine Darstellung ähnlich Figur 2, jedoch wird nun anstelle einer mechanisch arbeitenden Abformeinrichtung eine optisch arbeitende Abtastvorrichtung eingesetzt,
- Fig. 5:: eine Seitenansicht einer hydraulischen Spannvorrichtung, aufgesetzt auf zwei zu verbindende Flansche, ein Schraubbolzen gemäß Figur 1 ist im durch die hydraulischen Spannvorrichtung gedehnten Zustand, eine Mutter gemäß Figur 3 befindet sich oberhalb des zugehörigen Schraubengewindes, und
- Fig. 6:: ein Halbstück einer zweigeteilten Mutter für eine andere Ausführung der Erfindung.

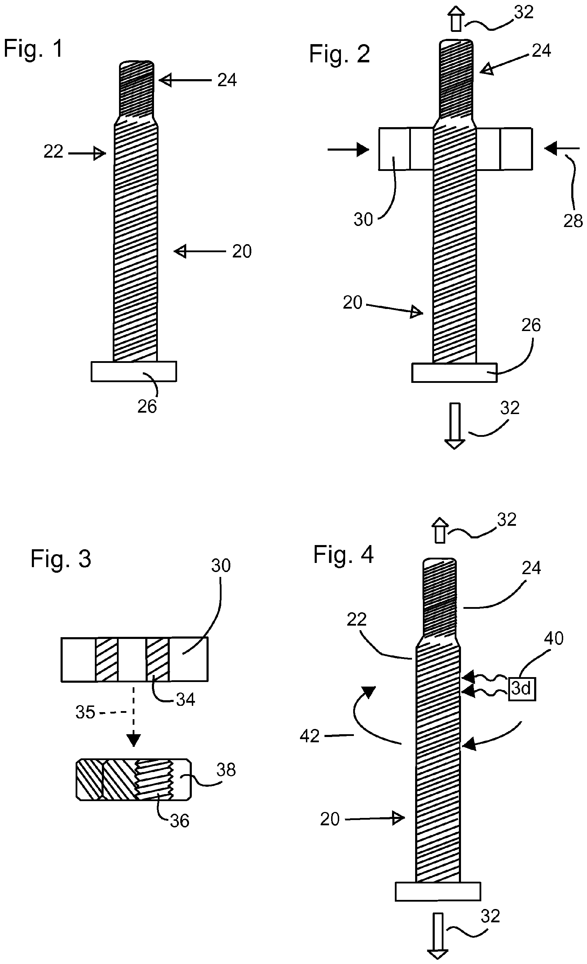

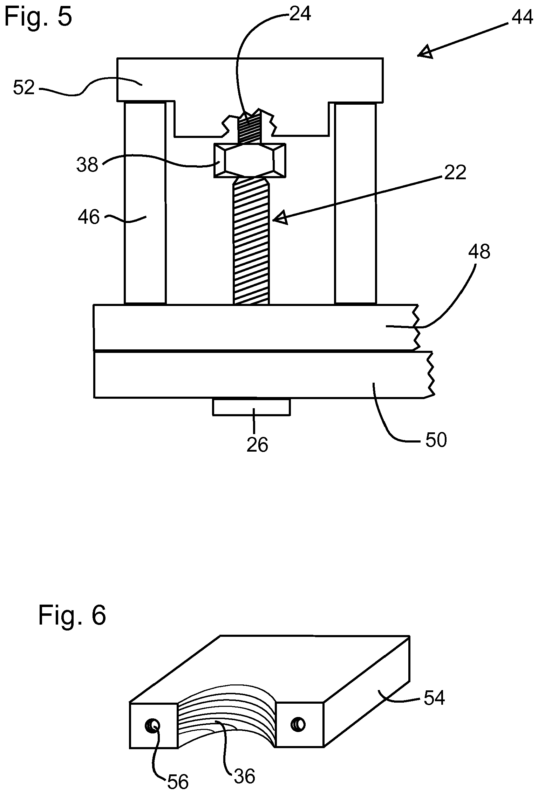

Die Figuren 1 bis 3 zeigen ein erstes Ausführungsbeispiel, das in Figur 5 im praktischen Einsatz ist. Figur 4 zeigt ein zweites Ausführungsbeispiel. Figur 6 zeigt ein drittes Ausführungsbeispiel.

Figur 1 zeigt einen Schraubbolzen 20 im entspannten Zustand. Er hat ein Schraubengewinde 22, einen verjüngten Bereich 24 mit einem dortigen Gewindebereich und einen Kopf 26.

Figur 2 zeigt denselben Schraubbolzen 24 im vorgegebenen, gedehnten Zustand. Pfeile 32 symbolisieren eine Zugspannung, durch die der Schraubbolzen 20 gelängt ist, er ist dadurch in den vorgegebenen, gedehnten Zustand gebracht. Dieser Zustand ist abhängig von der Größe der aufgebrachten Spannung, die durch die Pfeile 32 symbolisiert ist. Es gilt hier im Wesentlichen das Hooke'sche Gesetz. Dem Gewindebereich ist eine Abformeinrichtung 30 an der Stelle zugeordnet, wo in der montierten Schraubverbindung die Mutter ist. Die Abformeinrichtung 30 weist eine mindestens zwei Mal geteilte, typischerweise dreifach geteilte Ringform auf, die in ihrem Inneren mit einer Abdruckmasse gefüllt ist. Derartige Abdruckmassen sind bekannt, sie werden typischerweise in der Zahnmedizin eingesetzt. Sie ermöglichen eine sehr präzise Abformung des Schraubengewindes 22, das sich im vorgegebenen, gedehnten Zustand befindet. Die Abformmasse ist zunächst weich, so dass sie sich überall an das Schraubengewinde anpassen kann, sie wird mit leichtem Druck gegen das Schraubengewinde 22 gepresst. Dies erfolgt durch Schließen der Abformeinrichtung, das Schließen erfolgt entlang der Pfeile 28.

Ist das Abformmaterial ausreichend fest, beispielsweise ausgehärtet, kann die Abformeinrichtung 30 wieder geöffnet und abgenommen werden. Die Abdruckmasse in der Abformeinrichtung 30 zeigt nun ein exaktes, invertiertes Abbild 34 des Schraubengewindes 22 im vorgegebenen, gedehnten Zustand.

Im Verfahrensschritt gemäß Figur 3 wird anhand dieses Abbildes 34 der Abformeinrichtung 30 ein Mutterngewinde 36 einer Mutter 38 gefertigt, siehe Formschritt 35. Dies geschieht insbesondere in einer numerisch gesteuerten Werkzeugmaschine. Das Mutterngewinde 36 ist eine exakte Kopie des Abbildes 34. Um für einen Schraubvorgang zwischen Mutter 38 und Schraubengewinde 22 das nötige Spiel zu haben, ist das Mutterngewinde 36 geringfügig größer als das Abbild. Das Maß der Vergrößerung steht im Ermessen des Fachmanns. Es hängt ab von der Genauigkeit der Ausbildung des Schraubengewindes 22, der Genauigkeit der Fertigung des Mutterngewindes 36, der Genauigkeit des Abformvorgangs mittels der Abformeinrichtung 30, der geforderten Gängigkeit der Schraubenverbindung zwischen Schraubengewinde 22 und Mutterngewinde 36 und weiteren Einflussgrößen.

Wenn man, wie das dritte Ausführungsbeispiel zeigt, die Mutter mehrteilig, z.B. mindestens zweiteilig ausführt, ist eine Relativbewegung zwischen Mutter 38 und Schraubengewinde 22 nur noch in geringerem Umfang, möglicherweise gar nicht, erforderlich. In diesem Fall kann das Mutterngewinde 36 praktisch vollständig dem Abbild 34 entsprechen. Dies insbesondere, wenn man die Mutter gemäß Figur 6 nicht durch Drehen relativ zum Schraubengewinde 22 anzieht, sondern durch Distanzstücke, die zwischen Mutter 38 und verbindendem Werkstück geschoben werden, festgelegt und spielfrei macht.

In der Ausführung nach Figur 4 wird das Abbild 34 nicht mechanisch erzeugt, sondern optisch, es liegt als elektronische Datei vor. Es wird eine dreidimensionale arbeitende Abtastvorrichtung 40 verwendet, die entlang des Pfeils 42 um den Schraubbolzen 20, der sich in einem vorgegebenen, gedehnten Zustand befindet, herumbewegt wird. Alternativ können auch Abtastvorrichtungen eingesetzt werden, die ringförmig sind und keine umlaufende Bewegung benötigen. Zu Abtastvorrichtungen allgemein wird nur beispielshaft auf die US-Patentschrift 5,747,822 verwiesen. Mit Hilfe des elektronisch vorliegenden Abbildes 34, das die Abtastvorrichtung 40 liefert und das gegebenenfalls noch invertiert wird, wird entsprechend dem Formschritt 35 gemäß Figur 3 das Mutterngewinde 36 der Mutter 38 gefertigt. Alternativ kann auch eine geteilte Mutter gefertigt werden, wie sie in Figur 6 teilweise gezeigt ist.

Figur 5 zeigt den praktischen Einsatz. Dargestellt ist eine Schraubenspannvorrichtung 44, wie sie aus dem Stand der Technik bekannt ist. Sie hat einen Stützring 46, der sich auf einem ersten Flansch 48 abstützt. Darunter befindet sich ein zweiter Flansch 50. Diese beiden Flansche 48, 50 sollen verbunden werden. Im Unterschied zur Ausführung nach den Figuren 1, 2 und 4 ist das Schraubengewinde 22 länger ausgeführt. Vorzugsweise wird die Abformeinrichtung 30 dort angesetzt, wo sich beim späteren praktischen Einsatz auch die Mutter 38 befindet, also in diesem Fall unmittelbar oberhalb des ersten Flansches 48 und nicht im darüber befindlichen Teil des Schraubengewindes 22.

Die Schraubenspannvorrichtung 44 hat einen hydraulischen Teil 52, in diesem befinden sich hydraulische Arbeitsräume, wie sie aus dem Stand der Technik bekannt sind. Das hydraulische Teil 52 stützt sich auf dem Stützring 46 auf. Im hydraulischen Teil 52 befindet sich der verjüngte Bereich 24, der entsprechende Gewindebereich ist in ein passendes Innengewinde des hydraulischen Teils 52 eingeschraubt. Der Kopf 26 befindet sich unterhalb des zweiten Flansches 50.

Die Schraubenspannvorrichtung 44 nach Figur 5 befindet sich anfangs im entspannten Zustand, der hydraulische Arbeitsraum ist noch nicht betätigt. Wird nun Druck angelegt, dehnt sich der Schraubbolzen 20, er wird in einen gedehnten Zustand gebracht. Die Mutter 38 befindet sich noch im verjüngten Bereich 24. Dies gilt für den Zustand, dass das Mutterngewinde 36 nur mit geringer Vergrößerung dem Abbild 34 nachgeformt ist. Dadurch kann das Mutterngewinde 36 nicht auf das Schraubengewinde 22 im entspannten Zustand des Schraubbolzens 20 aufgeschraubt werden, weil die Gewinde nicht zueinander passen. Erst wenn der Schraubbolzen 20 sich im gedehnten Zustand befindet, passen die Gewinde besser zueinander und kann die Mutter 38 soweit nach unten gedreht werden, dass sie auf den ersten Flansch 48 aufliegt. Nun kann der hydraulische Arbeitsraum der Schraubenspannvorrichtung 44 wieder entlastet werden, die Schraubenspannvorrichtung 44 kann abgenommen werden, die Schraubenverbindung aus Schraubbolzen 20 und Mutter 38 hält nun die zu verbindenden Teile, also die beiden Flansche 48, 50, zusammen.

Auf die Ausbildung gemäß Figur 6 ist schon oben kurz eingegangen worden. Anstelle einer einstückigen Mutter, wie in Figur 3 gezeigt, wird nun eine mehrstückige, im konkreten Fall zweigeteilte, Mutter 38 verwendet. Figur 6 zeigt ein Halbstück 54 einer zweigeteilten Mutter. Das Mutterngewinde 36 ist entsprechend dem jeweiligen Abbild 34 geformt. Vorzugsweise werden zwei Halbstücke 54 miteinander verbunden und wird in diesem Zustand das Mutterngewinde 36 ausgebildet. Die Verbindung zweier Halbstücke 54 zu einer kompletten Mutter 38 erfolgt über geeignete Maßnahmen, in Figur 6 sind Löcher 56 gezeigt, durch die eine Schraubenverbindung erfolgen kann. Andere Verbindungsmöglichkeiten sind alternativ möglich. So kann beispielsweise eine äußere, spannbare Klammer verwendet werden, die die Halbstücke 54 zusammendrückt. Als günstig hat es sich erwiesen, die Mutter 38 in drei Teile aufzuteilen. Die drei Teile werden durch eine äußere, spannbare Klammer zusammengehalten.

## Patentansprüche

1. Verfahren zum Herstellen einer mechanisch, insbesondere hydraulisch spannbaren Schraubverbindung mit einem Schraubbolzen (20) und einer ein Mutterngewinde aufweisenden Mutter (38), wobei
- ein Schraubbolzen (20) mit einem vorgegebenen Schraubengewinde (22) hergestellt wird,
- der Schraubbolzen (20) in einen vorgegebenen, gedehnten Zustand gebracht wird,
- das Schraubengewinde (22) in dem vorgegebenen, gedehnten Zustand in seiner genauen Geometrie erfasst und ein Abbild (34) erstellt wird, insbesondere das Abbild (34) durch Abformen oder optisches Abtasten hergestellt wird, und
- das Mutterngewinde (36) als möglichst exakte Kopie des Abbilds hergestellt wird.

2. Verfahren nach Anspruch 1, **dadurch gekennzeichnet, dass** die exakte Kopie des Abbilds geringfügig, nämlich in einem Maß größer als Null und kleiner als 2,5% größer, insbesondere kleiner als 1% größer ausgeführt wird als das Abbild (34), um das für ein Aufschrauben der Mutter (38) auf dem Schraubbolzen (20) nötige Spiel bereitzustellen.

3. Verfahren nach Anspruch 1 oder 2, **dadurch gekennzeichnet, dass** der Schraubbolzen (20) dadurch in einen vorgegebenen, gedehnten Zustand gebracht wird, dass er in eine mechanische, insbesondere hydraulische Schraubenspannvorrichtung (44) eingebracht wird und in dieser gedehnt wird.

4. Verfahren nach einem der vorangegangenen Ansprüche, **dadurch gekennzeichnet, dass** für die Erstellung einer Kopie des Abbilds eine Invertierung des Abbilds durchgeführt wird.

5. Mechanisch, insbesondere hydraulisch spannbare Schraubverbindung mit einem Schraubbolzen (20) und einer Mutter (38), wobei der Schraubbolzen (20) ein Schraubengewinde (22) und die Mutter (38) ein Mutterngewinde (36) aufweist, **dadurch gekennzeichnet, dass** das Mutterngewinde (36) eine möglichst exakte Kopie eines Abbilds des Schraubengewindes (22) ist, welches Abbild von dem Schraubengewinde (22) in einem Zustand erhalten wurde, den das Schraubengewinde (22) in einem vorgegebenen, gedehnten Zustand des Schraubbolzens (20) hat.

6. Spannbare Schraubverbindung nach Anspruch 5, **dadurch gekennzeichnet, dass** das Mutterngewinde (36) der Mutter (38) nicht auf das Schraubengewinde (22) des Schraubbolzens (20) aufschraubbar ist, wenn der Schraubbolzen (20) im spannungsfreien Zustand ist.

## Claims

1. A method for producing a screw connection that can be tightened mechanically, in particular hydraulically, with a screw bolt (20) and a nut (38) having a nut thread, wherein
- a screw bolt (20) with a predefined screw thread (22) is produced,
- the screw bolt (20) is brought into a predefined elongated state,
- the exact geometry of the screw thread (22) is detected in the predefined elongated state and an image (34) is generated, in particular, the image (34) is generated by molding or optical scanning, and
- the nut thread (36) is produced as an exact a copy as possible of the image.

2. The method according to claim 1, **characterized in that** the exact copy of the image is made slightly larger than the image (34), i.e. larger by an extent greater than zero and less than 2.5 %, in particular larger by less than 1%, in order to provide the clearance required for screwing the nut (38) onto the screw bolt (20).

3. The method according to claim 1 or 2, **characterized in that** that the screw bolt (20) is brought into a predefined elongated state by being introduced into a mechanical, in particular hydraulic screw tightening device (44) and elongated therein.

4. The method according to any one of the preceding claims, **characterized in that** an inversion of the image is carried out for generating a copy of the image.

5. A screw connection that can be tightened mechanically, in particular hydraulically, with a screw bolt (20) and a nut (38), the screw bolt (20) having a screw thread (22) and the nut (38) a nut thread (36), **characterized in that** the nut thread (36) is as exact a copy as possible of an image of the screw thread (22), which image of the screw thread (22) was obtained in a state that the screw thread (22) has in a predefined elongated state of the screw bolt (20).

6. The screw connection that can be tightened according to claim 5, **characterized in that** the nut thread (36) of the nut (38) cannot be screwed onto the screw thread (22) of the screw bolt (20) if the screw bolt (20) is in a tension-free state.

## Revendications

1. Procédé de réalisation d'un assemblage vissé apte à être tendu mécaniquement, en particulier hydrauliquement, comprenant un boulon fileté (20) et un écrou (38) présentant un filet femelle, dans lequel
- on produit un boulon fileté (20) ayant un filetage de vis (22) prédéfini,
- on amène ledit boulon fileté (20) dans un état étendu prédéfini,
- on relève la géométrie exacte du filetage de vis (22) dans l'état étendu prédéfini et on crée une image (34), en particulier l'image (34) est créée par moulage ou par balayage optique, et
- on produit le filet femelle (36) en tant que copie aussi exacte que possible de l'image.

2. Procédé selon la revendication 1, **caractérisé par le fait que** la copie exacte de l'image est réalisée de manière à être légèrement plus grande, à savoir d'une mesure supérieure à zéro et inférieure à 2,5 %, en particulier inférieure à 1 %, que l'image (34) afin de fournir le jeu nécessaire au vissage de l'écrou (38) sur le boulon fileté (20).

3. Procédé selon la revendication 1 ou 2, **caractérisé par le fait que** le boulon fileté (20) est amené dans un état étendu prédéfini en étant placé dans un dispositif tendeur de vis (44) mécanique, en particulier hydraulique, et en étant étendu dans celui-ci.

4. Procédé selon l'une quelconque des revendications précédentes, **caractérisé par le fait que**, pour produire une copie de l'image, on procède à une inversion de l'image.

5. Assemblage vissé apte à être tendu mécaniquement, en particulier hydrauliquement, comprenant un boulon fileté (20) et un écrou (38), dans lequel le boulon fileté (20) présente un filetage de vis (22) et l'écrou (38) présente un filet femelle (36), **caractérisé par le fait que** ledit filet femelle (36) est une copie aussi exacte que possible d'une image du filetage de vis (22), laquelle image du filetage de vis (22) a été obtenue dans un état que le filetage de vis (22) présente lorsque le boulon fileté (20) se trouve dans un état étendu prédéfini.

6. Assemblage vissé apte à être tendu selon la revendication 5, **caractérisé par le fait que** le filet femelle (36) de l'écrou (38) ne peut pas être vissé sur le filetage de vis (22) du boulon fileté (20) lorsque le boulon fileté (20) se trouve à l'état exempt de tension.
